# EUROPEAN PATENT APPLICATION

(11) **EP 4 851 171 A1**
(43) Date of publication of application: **09.12.2026**
(21) Application number: 25748351.1
(22) Date of filing: 17.01.2025
(51) Int. Cl.: C07F 7/21, C07F 7/08

(54) **METHOD FOR PRODUCING SULFUR-CONTAINING CYCLIC SILOXANE**

(30) Priority: 29.01.2024 JP 2024011026
(71) Applicant: Sumitomo Seika Chemicals Co., Ltd., Kako-gun, Hyogo 675-0145 (JP)
(72) Inventor: MITA, Soichiro, Kako-gun, Hyogo 675-0145 (JP); TAIRA, Genki, Kako-gun, Hyogo 675-0145 (JP)
(74) Representative: Studio Torta S.p.A.
(86) International application number: PCT/JP2025/001286
(87) International publication number: WO 2025/164355

(57) **Abstract**

A sulfur-containing cyclic siloxane can be produced through a simple process even under mild conditions by means of a method for producing a sulfur-containing cyclic siloxane, the method comprising: a ring-opening step for reacting a cyclic siloxane with a dihalosilane to obtain a chain siloxane; and a recyclization step for reacting the chain siloxane with a sulfurizing agent to obtain a sulfur-containing cyclic siloxane containing a sulfur atom as an atom constituting a portion of the ring structure.

## Description

### Technical Field

The present disclosure relates to a method for producing a sulfur-containing cyclic siloxane.

### Background Art

Silane compounds are in use in a variety of electronic material applications including semiconductors. In the production of semiconductor devices, the compounds are used as raw materials for forming silicon-containing thin films and are in use in the production of thin films such as silicon films, silicon oxide films, silicon nitride films, silicon carbonitride films, silicon oxynitride films, and the like by a variety of vapor deposition steps. For example, in Patent Literature 1, a method for forming a uniform silicon oxide film using bis(diethylamino) silane (BDEAS), which is an aminosilane compound, as a silicon source in an atomic layer deposition (ALD) method has been proposed.

Regarding a method for synthesizing a sulfur-containing cyclic siloxane containing a sulfur atom as an atom constituting a part of a ring structure among such silane compounds, synthesis examples were reported in the past. For example, a method in which dimethyldichlorosilane is added to and reacted with a mixture of 5-anisyl-2,2,3,3-tetramethyl-5-thio-1,4,5,2,3-dithiaphosphadigermolane and hexamethylcyclotrisiloxane (Non Patent Literature 1), a method in which hexamethylcyclotrisiloxane and dodecamethylcyclohexasilane are reacted with sulfur (Non Patent Literature 2), a method in which a sulfur-containing cyclic siloxane is produced by thermally treating hexamethylcyclotrisiloxane and hexamethylcyclotrisilathiane (Non Patent Literature 3), and the like are known.

### Citation List

### Patent Literature

Patent Literature 1: WO2006/097525

### Non Patent Literature

Non Patent Literature 1: Canadian Journal of Chemistry, 1986, vol. 64, p. 615 to 620.
Non Patent Literature 2: Journal of Organometallic Chemistry, 1988, vol. 346, p. 287 to 296.
Non Patent Literature 3: Journal of Organometallic Chemistry, 1979, vol. 165, p.C1, C3, C4

### Summary of Invention

### Technical Problem

However, these conventionally known methods have problems such as requiring a reaction step at a high temperature of 150°C or higher and involving many steps. An object of the present disclosure is to provide a method enabling a sulfur-containing cyclic siloxane to be produced even by convenient steps under mild conditions.

### Solution to Problem

One aspect of the present disclosure provides a production method described in each of the following sections.

### [Section 1]

A method for producing a sulfur-containing cyclic siloxane, the method comprising:
a ring-opening step of reacting a cyclic siloxane and a dihalosilane to obtain a chain siloxane; and
a re-cyclization step of reacting the chain siloxane and a sulfurizing agent to obtain a sulfur-containing cyclic siloxane containing a sulfur atom as an atom constituting a part of a ring structure.

### [Section 2]

The method according to the section 1,
wherein the cyclic siloxane is a compound represented by the following formula: 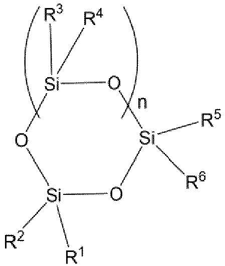
wherein R¹ to R⁶ are at each occurrence independently a hydrogen atom, a hydrocarbon group having 1 to 6 carbon atoms, or a hydrocarbon oxy group having 1 to 6 carbon atoms, R¹ to R⁶ each may bond to each other to form a ring, and
n is an integer of 0 to 2,
the dihalosilane is a compound represented by the following formula: 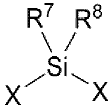
wherein R⁷ and R⁸ are at each occurrence independently a hydrogen atom, a hydrocarbon group having 1 to 6 carbon atoms, or a hydrocarbon oxy group having 1 to 6 carbon atoms, and
X is at each occurrence independently a halogen atom, and
the sulfurizing agent is a compound represented by the following formula:

   Y₂S
wherein Y is at each occurrence independently a hydrogen atom, a sodium atom, or a lithium atom.

### [Section 3]

The method according to the section 1 or 2,
wherein in the ring-opening step, one or more catalysts selected from the group consisting of a Lewis base compound having a bond represented by -C(=O)N<, a phosphorus compound having a P=O bond, a quaternary ammonium salt, and a quaternary phosphonium salt are used.

### [Section 4]

The method according to any one of the sections 1 to 3,
wherein the sulfur-containing cyclic siloxane is a compound represented by the following formula: 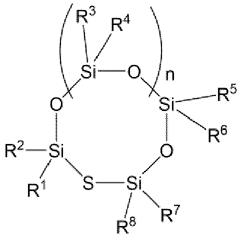
wherein R¹ to R⁸ are at each occurrence independently a hydrogen atom, a hydrocarbon group having 1 to 6 carbon atoms, or a hydrocarbon oxy group having 1 to 6 carbon atoms, R¹ to R⁸ each may bond to each other to form a ring, and
n is an integer of 0 to 2.

### [Section 5]

The method according to any one of the sections 1 to 4,
wherein the chain siloxane is a compound represented by the following formula: 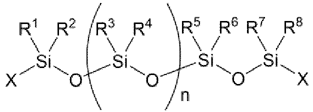
wherein R¹ to R⁸ are at each occurrence independently a hydrogen atom, a hydrocarbon group having 1 to 6 carbon atoms, or a hydrocarbon oxy group having 1 to 6 carbon atoms, R¹ to R⁸ each may bond to each other to form a ring,
X is at each occurrence independently a halogen atom, and
n is an integer of 0 to 2.

### [Section 6]

The method according to any one of the sections 1 to 5,
wherein the cyclic siloxane is a compound represented by the following formula: 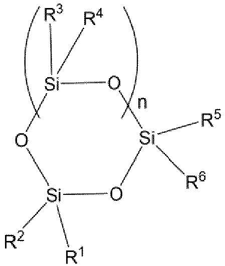
wherein R¹ to R⁶ are at each occurrence independently a hydrogen atom or an alkyl group having 1 to 6 carbon atoms, and
n is an integer of 0 to 2, and
the dihalosilane is a compound represented by the following formula: 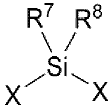
wherein R⁷ and R⁸ are at each occurrence independently a hydrogen atom or an alkyl group having 1 to 6 carbon atoms, and
X is at each occurrence independently a halogen atom.

### [Section 7]

The method according to any one of the sections 1 to 6,
wherein the cyclic siloxane is a compound represented by the following formula: 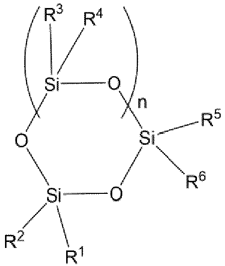
wherein R¹ to R⁶ are methyl groups, and
n is an integer of 0 to 2, and
the dihalosilane is a compound represented by the following formula: 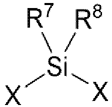
wherein R⁷ and R⁸ are methyl groups, and
X is at each occurrence independently a halogen atom.

### [Section 8]

The method according to any one of the sections 1 to 7,
wherein the cyclic siloxane is a compound represented by the following formula: 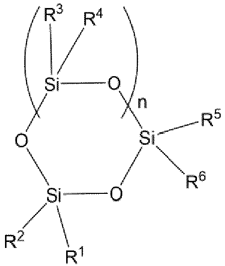
wherein R¹ to R⁶ are at each occurrence independently a hydrogen atom, a hydrocarbon group having 1 to 6 carbon atoms, or a hydrocarbon oxy group having 1 to 6 carbon atoms, R¹ to R⁶ each may bond to each other to form a ring, and
n is 0 or 1.

### [Section 9]

The method according to any one of the sections 1 to 8,
wherein the dihalosilane is a compound represented by the following formula: 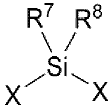
wherein R⁷ and R⁸ are at each occurrence independently a hydrogen atom, a hydrocarbon group having 1 to 6 carbon atoms, or a hydrocarbon oxy group having 1 to 6 carbon atoms, and
X's are chlorine atoms.

### [Section 10]

The method according to any one of the sections 1 to 9,
wherein the dihalosilane is a compound represented by the following formula: 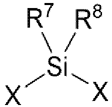
wherein R⁷ and R⁸ are at each occurrence independently a hydrogen atom or an alkyl group having 1 to 6 carbon atoms, and
X is at each occurrence independently a halogen atom.

### [Section 11]

The method according to any one of the sections 1 to 10,
wherein the sulfurizing agent is a compound represented by the following formula:

   Y₂S
wherein Y is at each occurrence independently a hydrogen atom or a lithium atom.

### [Section 12]

The method according to any one of the sections 1 to 11,
wherein the sulfur-containing cyclic siloxane is a silicon-containing film precursor.

### Advantageous Effect of Invention

According to the production method according to one aspect of the present disclosure, it is possible to produce a sulfur-containing cyclic siloxane by convenient steps under mild conditions.

### Brief Description of Drawing

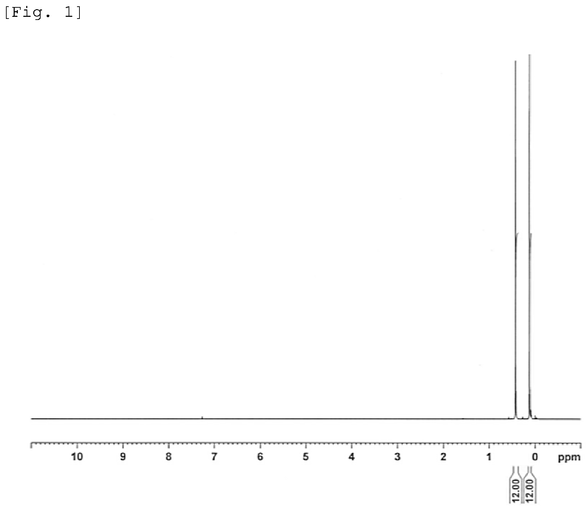

[Figure 1] Figure 1 shows a ¹H-NMR chart of 2,2,4,4,6,6,8,8-octamethyl-1,3,5-trioxa-7-thia-2,4,6,8-tetrasilacyclooctane obtained by an example of the present disclosure.

### Description of Embodiment

Hereinafter, a method for producing a sulfur-containing cyclic siloxane of the present disclosure will be described in detail.

The method for producing a sulfur-containing cyclic siloxane of the present disclosure has at least two steps of a ring-opening step and a re-cyclization step.

The method for producing a sulfur-containing cyclic siloxane of the present disclosure includes a ring-opening step of reacting a cyclic siloxane and a dihalosilane to obtain a chain siloxane and
a re-cyclization step of reacting the chain siloxane and a sulfurizing agent to obtain a sulfur-containing cyclic siloxane containing a sulfur atom as an atom constituting a part of a ring structure.

### <Ring-opening step>

In the ring-opening step, a cyclic siloxane and a dihalosilane are reacted with each other to obtain a chain siloxane.

In the ring-opening step, it is preferable that the cyclic siloxane and the dihalosilane are reacted with each other in the presence of one or more catalysts selected from a Lewis base compound having a bond represented by -C(=O)N<, a phosphorus compound having a P=O bond, a quaternary ammonium salt, and a quaternary phosphonium salt to obtain a chain siloxane.

For example, in the ring-opening step, the cyclic siloxane and the dihalosilane may be reacted with each other in the presence of a catalyst to open the ring of the cyclic siloxane and produce a chain siloxane having halogen atoms at both terminals, which is a synthetic intermediate, and this step can be represented by, for example, the following reaction formula:

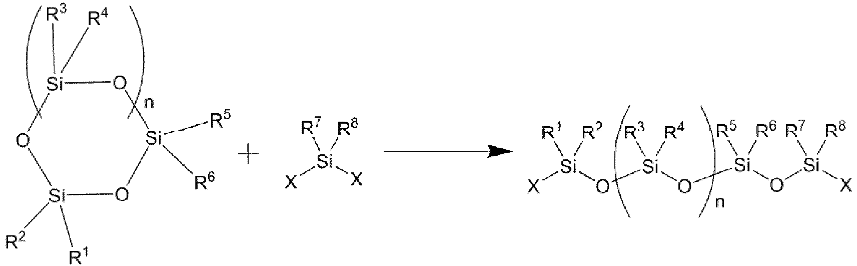

R¹ to R⁸ are at each occurrence independently a hydrogen atom, a hydrocarbon group having 1 to 6 carbon atoms, or a hydrocarbon oxy group having 1 to 6 carbon atoms, R¹ to R⁸ each may bond to each other to form a ring, n is an integer of 0 to 2, and X is at each occurrence independently a halogen atom.

### [Cyclic siloxane]

In the present disclosure, the cyclic siloxane is a compound in which a plurality of siloxane bonds is connected to each other to form at least a part of a cyclic structure. In the present disclosure, the cyclic siloxane may be a compound represented by the following formula: 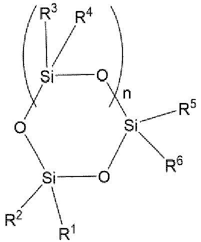 wherein R¹ to R⁶ are at each occurrence independently a hydrogen atom, a hydrocarbon group having 1 to 6 carbon atoms, or a hydrocarbon oxy group having 1 to 6 carbon atoms, R¹ to R⁶ each may bond to each other to form a ring, and n is an integer of 0 to 2. The cyclic siloxane may be aliphatic or aromatic.

The hydrocarbon groups in R¹ to R⁶ may be aliphatic hydrocarbon groups or aromatic hydrocarbon groups and are preferably aliphatic hydrocarbon groups. Examples of the hydrocarbon groups in R¹ to R⁶ include alkyl groups having 1 to 6 (for example, 1, 2, 3, 4, 5, or 6) carbon atoms (for example, a methyl group, an ethyl group, a propyl group, an isopropyl group, a n-butyl group, a sec-butyl group, an isobutyl group, a tert-butyl group, or a pentyl group), alkenyl groups having 2 to 6 (for example, 2, 3, 4, 5, or 6) carbon atoms (for example, a vinyl group or a 2-propenyl group), and alkynyl groups having 2 to 6 (for example, 2, 3, 4, 5, or 6) carbon atoms (for example, an ethynyl group or a propynyl group).

The hydrocarbon oxy groups in R¹ to R⁶ may be aliphatic hydrocarbon oxy groups or aromatic hydrocarbon oxy groups and are preferably aliphatic hydrocarbon oxy groups. Examples of the hydrocarbon oxy groups in R¹ to R⁶ include alkoxy groups having 1 to 6 (for example, 1, 2, 3, 4, 5, or 6) carbon atoms (for example, a methoxy group, an ethoxy group, or a propoxy group), alkenyl oxy groups having 2 to 6 (for example, 2, 3, 4, 5, or 6) carbon atoms (for example, a vinyl oxy group or a 2-propenyl oxy group), and alkynyl oxy groups having 2 to 6 (for example, 2, 3, 4, 5, or 6) carbon atoms (for example, an ethynyl oxy group or a propynyl oxy group).

The average numbers of carbon atoms in R¹ to R⁶ may be 0 to 6 and are preferably 1 to 3 and more preferably 1 or 2.

At least one of R¹ to R⁶ may not be a hydrogen atom (but the hydrocarbon group or the hydrocarbon oxy group described above). The number of R¹ to R⁶ that are other than hydrogen atoms is 0% or more, 10% or more, 20% or more, 30% or more, 40% or more, 50% or more, 60% or more, 70% or more, 80% or more, or 90% or more and preferably 50% or more of the total number of R¹ to R⁶. R¹ to R⁶ may be the same as one another.

R¹ to R⁶ may be hydrocarbon groups or hydrocarbon oxy groups (particularly, aliphatic groups) and may be linear, branched, or cyclic and are preferably linear or branched and more preferably linear.

All of R¹ to R⁶ may be hydrogen atoms or alkyl groups having 1 to 6 carbon atoms and are preferably alkyl group having 1 to 6 carbon atoms (for example, 1 to 3 carbon atoms or 1 or 2 carbon atoms) and more preferably methyl groups.

R¹ to R⁶ may bond to one another either to form a ring or not to form a ring. In a case where a ring is formed, the ring may be formed of one of R¹ to R⁶ and R¹ to R⁶ bound to, for example, the same silicon atom or an adjacent silicon atom, and typically, R¹ to R⁶ bound to the same silicon atom may form a ring with one another. Here, "bond" means the bonding of bonding sites that R¹ to R⁶ have, respectively, (for example, bonding sites generated by the elimination of hydrogen atoms in R¹ to R⁶) to one another. A structure that is formed by R¹ to R⁶ bound to one another may be a linear or branched alkylene structure, a linear or branched oxy alkylene structure or a linear or branched dioxy alkylene structure, and the number of carbon atoms may be 2 to 12, 2 to 6, or 4 to 6.

n is an integer of 0 to 2 and is, for example, 1.

The molecular weight of the cyclic siloxane may be 100 to 1,000 and is preferably 100 to 400.

The number of carbon atoms in the cyclic siloxane may be 0 to 50 and is preferably 0 to 20.

### [Dihalosilane]

The dihalosilane may be a compound represented by the following formula: 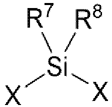 wherein R⁷ and R⁸ are at each occurrence independently a hydrogen atom, a hydrocarbon group having 1 to 6 carbon atoms, or a hydrocarbon oxy group having 1 to 6 carbon atoms, R⁷ and R⁸ may bond to each other to form a ring, and X is at each occurrence independently a halogen atom.

The dihalosilane may be aliphatic or aromatic.

The hydrocarbon groups in R⁷ and R⁸ may be aliphatic hydrocarbon groups or aromatic hydrocarbon groups and are preferably aliphatic hydrocarbon groups. Examples of the hydrocarbon groups in R⁷ and R⁸ include alkyl groups having 1 to 6 (for example, 1, 2, 3, 4, 5, or 6) carbon atoms (for example, a methyl group, an ethyl group, a propyl group, an isopropyl group, a n-butyl group, a sec-butyl group, an isobutyl group, a tert-butyl group, or a pentyl group), alkenyl groups having 2 to 6 (for example, 2, 3, 4, 5, or 6) carbon atoms (for example, a vinyl group or a 2-propenyl group), and alkynyl groups having 2 to 6 (for example, 2, 3, 4, 5, or 6) carbon atoms (for example, an ethynyl group or a propynyl group).

The hydrocarbon oxy groups in R⁷ and R⁸ may be aliphatic hydrocarbon oxy groups or aromatic hydrocarbon oxy groups and are preferably aliphatic hydrocarbon oxy groups. Examples of the hydrocarbon oxy groups in R⁷ and R⁸ include alkoxy groups having 1 to 6 (for example, 1, 2, 3, 4, 5, or 6) carbon atoms (for example, a methoxy group, an ethoxy group, or a propoxy group), alkenyl oxy groups having 2 to 6 (for example, 2, 3, 4, 5, or 6) carbon atoms (for example, a vinyl oxy group or a 2-propenyl oxy group), and alkynyl oxy groups having 2 to 6 (for example, 2, 3, 4, 5, or 6) carbon atoms (for example, an ethynyl oxy group or a propynyl oxy group).

The average numbers of carbon atoms in R⁷ and R⁸ may be 0 to 6 and are preferably 1 to 3 and more preferably 1 or 2.

At least one of R⁷ and R⁸ may not be a hydrogen atom (but the hydrocarbon group or the hydrocarbon oxy group described above), and both may be other than a hydrogen atom.

R⁷ and R⁸ may be hydrocarbon groups or hydrocarbon oxy groups (particularly, aliphatic groups) and may be linear, branched, or cyclic and are preferably linear or branched and more preferably linear.

Both of R⁷ and R⁸ may be hydrogen atoms or alkyl groups having 1 to 6 carbon atoms and are preferably alkyl group having 1 to 6 carbon atoms (for example, 1 to 3 carbon atoms or 1 or 2 carbon atoms) and more preferably methyl groups.

Both of R⁷ and R⁸ may bond to each other either to form a ring or not to form a ring. Here, "bond" means the bonding of bonding sites that R⁷ and R⁸ have, respectively, (for example, bonding sites generated by the elimination of hydrogen atoms in R⁷ and R⁸) to each other.

X is at each occurrence independently a halogen atom and are, for example, chlorine atoms, bromine atoms, and iodine atoms.

Regarding the molar ratio between the cyclic siloxane and the dihalosilane, the number of moles of the dihalosilane relative to 1 mol of the cyclic siloxane is preferably 1 to 5, may be, for example, 1 to 3.5, and is more preferably 1 to 2.

### [Catalyst]

The catalyst is not particularly limited as long as the ring-opening step can be catalyzed, but one or more catalysts selected from a Lewis base compound having a bond represented by -C(=O)N<, a phosphorus compound having a P=O bond, a quaternary ammonium salt, and a quaternary phosphonium salt are preferably used. One catalyst may be used or two or more catalyst may be jointly used.
(Lewis base compound having bond represented by -C(=O)N<)

As the Lewis base compound having a bond represented by - C(=O)N<, any carboxylic acid amide compounds, urethane compounds, or urea compounds can be used. From the viewpoint of the reaction efficiency, a Lewis base compound having a tertiary amide bond but having no H atoms directly bound to a N atom is preferable.

Examples of the carboxylic acid amide compounds include N,N-dimethylformamide, N,N-dimethylacetamide, N,N-dimethylpropionamide, N,N-dimethylisobutyramide, N,N-dimethylacrylamide, N,N-dimethylmethacrylamide, N,N-dimethylacetamide, N,N-diethylformamide, N,N-diethylacetamide, N,N,N',N'-tetraacetylethylenediamine, 1-methyl-2-pyrrolidone, and the like. Among these, N,N-dimethylformamide is easily available and thus preferable.

Examples of the urethane compounds include N-methoxycarbonylmaleimide, 3-methyl-2-oxazolidone, 1-ethoxycarbonyl-4-piperidone, 1-tert-butoxycarbonylpyrrolidine, and the like.

Examples of the urea compounds include tetramethylurea, 1,3-dimethyl-3,4,5,6-tetrahydro-2(1H)-pyrimidinone, 1,1,3,3-tetraethylurea, 1,1,3,3-tetrabutylurea, N,N'-dimethyl-N,N'-diphenylurea, 1,3-dimethyl-2-imidazolidinone, 1,3-dimethyluracil, 1,3-dimethylbarbituric acid, caffeine, and the like. Among these, tetramethylurea, 1,3-dimethyl-3,4,5,6-tetrahydro-2(1H)-pyrimidinone, or 1,3-dimethyl-2-imidazolidinone is easily available and thus preferable.

### (Phosphorus compound having P=O bond)

The phosphorus compound having a P=O bond may be an inorganic phosphorus compound or an organic phosphorus compound. Examples of the phosphorus compound having a P=O bond include compounds represented by R'₃P=O, phosphoric acids represented by (OH)₃P=O, compounds represented by (OR') (OH)₂P=O, compounds represented by R' (OH)₂P=O, compounds represented by (OR')₂(OH)P=O, compounds represented by R'₂(OH)P=O, compounds represented by (OR')₃P=O, compounds represented by (OR')₂R'P=O, compounds represented by [(OR')₂P=O]₂R', compounds represented by [(OH)₂P=O]₂R', and compounds represented by (OR')₂HP=O (here, R is at each occurrence independently an alkyl group optionally having a halogen atom as a substituent, an aryl group optionally having a halogen atom as a substituent, or an alkenyl group optionally having one or more substituents and may include a hetero atom (for example, a nitrogen atom, an oxygen atom, or a silicon atom) in the skeleton).

R' may be a hydrocarbon group having 1 or more and 40 or less carbon atoms. The hydrocarbon group may be an aromatic hydrocarbon group or an aliphatic hydrocarbon group and is particularly preferably an aliphatic hydrocarbon group. The hydrocarbon group may be branched, cyclic, or linear and is more preferably linear.

The number of carbon atoms in R' may be 1 or more, 2 or more, 3 or more, 4 or more, 5 or more, 6 or more, 7 or more, or 8 or more and may be 20 or less, 15 or less, 10 or less, 5 or less, or 3 or less.

The number of the hetero atoms in R' may be 1 to 5 and may be, for example, 1 to 3. R' may not have any hetero atoms.

Examples of the compounds represented by R'₃P=O include trimethylphosphine oxide, triethylphosphine oxide, tri-n-propylphosphine oxide, tributylphosphine oxide, tri-n-octylphosphine oxide, tris(2-ethylhexyl)phosphine oxide, tricyclohexylphosphine oxide, triphenylphosphine oxide, methyl(diphenyl)phosphine oxide, ethyldiphenylphosphine oxide, diphenylvinylphosphine oxide, ethynyl(diphenyl)phosphine oxide, methoxymethyl(diphenyl)phosphine oxide, cyclohexyldiphenylphosphine oxide, (4-bromophenyl)diphenylphosphine oxide, (3-bromophenyl)diphenylphosphine oxide, bis(4-bromophenyl)phenylphosphine oxide, bis(3-bromophenyl)phenylphosphine oxide, tris(3-bromophenyl)phosphine oxide, tris(4-methylphenyl)phosphine oxide, 2,5-dihydroxyphenyl(diphenyl)phosphine oxide, diphenyl(2,4,6-trimethylbenzoyl)phosphine oxide, phenyl bis(2,4,6-trimethylbenzoyl)phosphine oxide, 3-methyl-1-phenyl-2-phospholene 1-oxide, [(N,N-diisobutylcarbamoyl)methyl]octylphenylphosphine oxide, 1,2-bis(diphenylphosphino)ethane monoxide, 1,3-bis(diphenylphosphino)propane monoxide, 1,8-bis(diphenylphosphinyl)naphthalene, bis[2-[(oxo)diphenylphosphino]phenyl]ether, and 2,8-bis(diphenylphosphoryl)dibenzo[b,d]furan.

The compounds represented by (OH)₃P=O are phosphoric acid.

Examples of the compounds represented by (OR') (OH)₂P=O include methyl phosphate and phenyl phosphate.

Examples of the compounds represented by R'(OH)₂P=O include methylphosphonic acid, butylphosphonic acid, vinylphosphonic acid, and phenylphosphonic acid.

Examples of the compounds represented by (OR')₂(OH)P=O include dimethyl phosphate, dibutyl phosphate, and diphenyl phosphate.

Examples of the compounds represented by R'₂(OH)P=O include dimethylphosphinic acid and diphenylphosphinic acid.

Examples of the compounds represented by (OR')₃P=O include trimethyl phosphate, tributyl phosphate, triallyl phosphate, triphenyl phosphate, and tris(trimethylsilyl) phosphate.

Examples of the compounds represented by (OR')₂R'P=O include dimethyl methylphosphonate and diethyl vinylphosphonate.

Examples of the compounds represented by [(OR')₂P=O]₂R' include tetraisopropyl methylenediphosphonate.

Examples of the compounds represented by [(OH)₂P=O]₂R' include methylenediphosphonic acid.

Examples of the compounds represented by (OR')₂HP=O include dimethyl phosphite, dibutyl phosphite, and diphenyl phosphite.

Among these, from the viewpoint of the reaction efficiency, the compounds represented by R'₃P=O are preferable, and from the viewpoint of the reaction efficiency and easy availability, trimethylphosphine oxide, triethylphosphine oxide, tri-n-propylphosphine oxide, tributylphosphine oxide, tri-n-octylphosphine oxide, tris(2-ethylhexyl)phosphine oxide, tricyclohexylphosphine oxide, triphenylphosphine oxide, methyl(diphenyl)phosphine oxide, ethyldiphenylphosphine oxide, diphenylvinylphosphine oxide, ethynyl(diphenyl)phosphine oxide, methoxymethyl(diphenyl)phosphine oxide, or cyclohexyldiphenylphosphine oxide is more preferable.

### (Quaternary ammonium salt and quaternary phosphonium salt)

As the quaternary ammonium salt and the quaternary phosphonium salt, any quaternary ammonium salts and quaternary phosphonium salts can be used.

Examples of the quaternary ammonium salt include tetrabutylammonium bromide, tetrabutylammonium chloride, tetrapropylammonium bromide, methyltri-n-octylammonium chloride, and the like. Examples of the quaternary phosphonium salt include tetrabutylphosphonium bromide, tetrabutylphosphonium chloride, methyltriphenylphosphonium bromide, and the like. Among these, methyltri-n-octylammonium chloride or tetrabutylphosphonium bromide is easily available and thus preferable.

The amount of the catalyst used is preferably 0.0001 to 5 mol, more preferably 0.0005 to 3 mol, and still more preferably 0.001 to 1 mol relative to 1 mol of the cyclic siloxane. When the amount of the catalyst used is 0.0001 mol or more, a more sufficient catalytic effect can be obtained, and when the amount of the catalyst used exceeds 5 mol, there may be an economic disadvantage.

The reaction temperature of a ring-opening reaction is preferably -10°C to 140°C and more preferably 0°C to 100°C. A mixing method and a mixing order of reaction raw materials can be appropriately set. For example, the cyclic siloxane and the catalyst may be collectively mixed together, and the dihalosilane may be then added dropwise thereto.

After the ring-opening reaction, a step of removing the catalyst may be provided. Examples of a method for removing the catalyst include distillation, filtration, decantation, and the like.

A reaction solvent may be used as necessary to improve the uniformity of a reaction system, improve the stirability by increasing the volume of the reaction system, or the like. One solvent can be used singly or two or more solvents can be appropriately used in combination. The solvent can be appropriately selected except from substances that may react with the cyclic siloxane and the dihalosilane. Examples of the solvent include aromatic hydrocarbon solvents such as toluene, xylene, ethylbenzene, and mesitylene; aliphatic hydrocarbon solvents such as hexane, heptane, octane, isooctane, decane, undecane, dodecane, tetradecane, hexadecane, cyclohexane, methylcyclohexane, and paraffin; hydrocarbon solvents such as industrial gasoline (rubber solvents and the like), petroleum benzine, and solvent naphtha; ketone solvents such as acetone, methyl ethyl ketone, 2-pentanone, 3-pentanone, 2-hexanone, 2-heptanone, 4-heptanone, methyl isobutyl ketone, diisobutyl ketone, acetonylacetone, and cyclohexanone; ester solvents such as ethyl acetate, propyl acetate, isopropyl acetate, butyl acetate, and isobutyl acetate; ether-based solvents such as diethyl ether, dipropyl ether, diisopropyl ether, dibutyl ether, 1,2-dimethoxyethane, 1,4-dioxane, and tetrahydrofuran; solvents having an ester moiety and an ether moiety such as 2-methoxyethyl acetate, 2-ethoxyethyl acetate, propylene glycol monomethyl ether acetate, and 2-butoxyethyl acetate; siloxane solvents such as hexamethyldisiloxane, octamethyltrisiloxane, and dimethylsilicone oil; nitrile solvents such as acetonitrile; chlorinated hydrocarbon solvents such as methylene chloride, chloroform, and carbon tetrachloride; fluorine-modified aromatic hydrocarbon-based solvents such as m-xylene hexafluoride and benzotrifluoride; fluorine-modified ether solvents such as methyl perfluorobutyl ether, ethyl perfluorobutyl ether, and perfluoro(2-butyltetrahydrofuran); and dimethyl sulfoxide.

Among these, the aromatic hydrocarbon solvents, the aliphatic hydrocarbon solvents, the ketone solvents, the ester solvents, the nitrile solvents, the fluorine-modified aromatic hydrocarbon solvents, or dimethyl sulfoxide is preferable, and toluene, hexane, heptane, acetone, methyl ethyl ketone, methyl isobutyl ketone, ethyl acetate, acetonitrile, m-xylene hexafluoride, or dimethyl sulfoxide is more preferable.

In a case where the cyclic siloxane is solid, there is no need to uniformly dissolve the cyclic siloxane in the reaction solvent, and the ring-opening reaction may be performed in a state where the cyclic siloxane has been partially dissolved.

The amount of the solvent used is preferably 1 to 1,000 parts by mass and more preferably 5 to 500 parts by mass relative to a total of 100 parts by mass of the cyclic siloxane and the dihalosilane.

A reaction pressure may be normal pressure or an increased pressure and is preferably the atmospheric pressure.

In order to handle flammable compounds, the atmosphere of the reaction system is desirably an atmosphere of an inert gas from the viewpoint of disaster prevention. Examples of the inert gas include nitrogen, argon, and the like.

A reaction time is 0.1 to 100 hours and preferably 1 to 50 hours.

### <Re-cyclization step>

The re-cyclization step is a step of reacting the chain siloxane obtained in the ring-opening step with a sulfurizing agent to obtain a sulfur-containing cyclic siloxane.

In the re-cyclization step, a sulfur-containing cyclic siloxane crosslinked with sulfur may be obtained by reacting the chain siloxane with a sulfurizing agent represented by Y₂S to form a cyclic structure in the molecule, and this step is represented by, for example, the following reaction formula. In the formula, X, Y, n, and R¹ to R⁸ are as described above, and the above description is referenced.

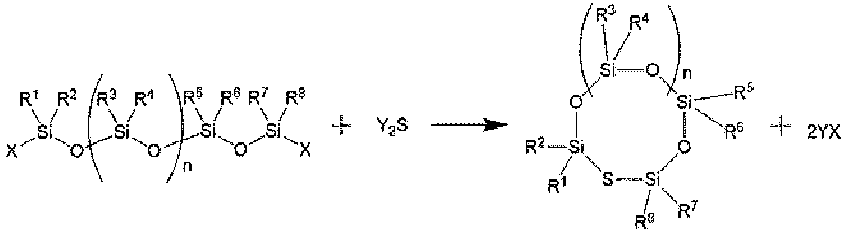

Regarding the molar ratio between Y₂S and the chain siloxane in the present reaction, the number of moles of Y₂S relative to 1 mol of the chain siloxane may be 0.8 to 5.0 and is preferably 0.8 to 2.0 and more preferably 1.0 to 1.5. A reaction temperature is preferably 0°C to 100°C and more preferably 10°C to 40°C.

A method for mixing reaction raw materials can be appropriately set. For example, the sulfurizing agent may be added to the chain siloxane.

In the present reaction, a base may be added as necessary. Examples of the base include tertiary amines such as trimethylamine, triethylamine, diisopropylethylamine, pyridine, pyrimidine, and pyrazine. The amount of the base used is preferably 0.8 to 4.0 mol and more preferably 1.5 to 2.5 mol relative to 1 mol of the chain siloxane.

In the present reaction, an organic solvent may be used as necessary. The organic solvent may be added before the reaction or after the reaction. Examples of the solvent include aliphatic hydrocarbon solvents such as hexane, cyclohexane, methylcyclohexane, heptane, octane, isooctane, nonane, decane, and undecane; halogenated hydrocarbon solvents such as dichloroethane, dichloromethane, and chloroform; aromatic hydrocarbon solvents such as benzene, toluene, xylene, ethylbenzene, chlorobenzene, and trichlorobenzene; ether solvents such as diethyl ether, dipropyl ether, diisopropyl ether, 1,2-dimethoxyethane, 1,4-dioxane, tetrahydrofuran (THF), and ethylene glycol dimethyl ether; ketone solvents such as acetone, methyl ethyl ketone, 2-pentanone, 3-pentanone, 2-hexanone, 2-heptanone, 4-heptanone, methyl isobutyl ketone, diisobutyl ketone, acetonylacetone, and cyclohexanone; ester solvents such as ethyl acetate, propyl acetate, isopropyl acetate, butyl acetate, and isobutyl acetate; and mixtures thereof.

Among these, the aromatic hydrocarbon solvents or the ether solvents are preferable, and toluene or tetrahydrofuran (THF) is more preferable. One organic solvent may be used or two or more organic solvent may be used in combination.

The amount of the solvent used is preferably 10 to 5,000 parts by mass and may be, for example, 300 to 3,000 parts by mass relative to 100 parts by mass of the chain siloxane.

In order to avoid the hydrolysis of the chain siloxane and the sulfur-containing cyclic siloxane, the reaction system is desirably fully performed under anhydrous conditions, and the reaction is performed with the total amount of moisture that is contained in all of the raw materials relative to the total mass of all of the raw materials used set within a range of 0 to 5000 mass ppm and preferably 0 to 500 mass ppm. A reaction device is desirably used after being dried. Examples of a drying method include heat drying, vacuum drying, and inert gas replacement. Examples of the inert gas include nitrogen, argon, and the like.

A reaction pressure may be normal pressure or an increased pressure and is preferably the atmospheric pressure.

In the present reaction system, in order to handle flammable compounds, a closed system and an atmosphere of an inert gas are desirable. Examples of the inert gas include nitrogen, and argon.

A reaction time is preferably 0.1 to 100 hours and more preferably 0.1 to 5 hours.

A method for removing the sulfur-containing cyclic siloxane from a reaction solution can be appropriately set. Examples thereof include a method in which a low-molecular-weight component such as the solvent or the raw material is removed by vacuum evaporation and a method in which the sulfur-containing cyclic siloxane is distilled.

### [Chain siloxane]

In the present disclosure, the chain siloxane may be a compound represented by following formula: 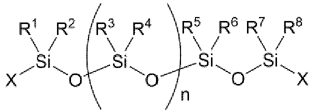
wherein R¹ to R⁸ are at each occurrence independently a hydrogen atom, a hydrocarbon group having 1 to 6 carbon atoms, or a hydrocarbon oxy group having 1 to 6 carbon atoms, R¹ to R⁸ each may bond to each other to form a ring,
X is at each occurrence independently a halogen atom, and
n is an integer of 0 to 2.

The chain siloxane may be aliphatic or aromatic.

The chain siloxane can be obtained by the above-described ring-opening step. In the formula, X, n, and R¹ to R⁸ are as described above, and the above description is referenced.

### [Sulfurizing agent]

The sulfurizing agent may be a compound represented by the following formula:

Y₂S.

Y is at each occurrence independently a hydrogen atom, a sodium atom, or a lithium atom. Y is preferably a hydrogen atom or a lithium atom and more preferably a hydrogen atom.

### [Sulfur-containing cyclic siloxane]

In the present disclosure, the sulfur-containing cyclic siloxane is a cyclic siloxane compound containing a sulfur atom as an atom constituting a part of a ring structure and may be a compound represented by the following formula: 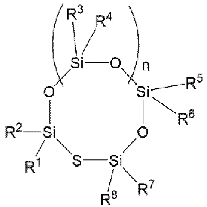
wherein R¹ to R⁸ are at each occurrence independently a hydrogen atom, a hydrocarbon group having 1 to 6 carbon atoms, or a hydrocarbon oxy group having 1 to 6 carbon atoms, R¹ to R⁸ each may bond to each other to form a ring, and
n is an integer of 0 to 2.

The sulfur-containing cyclic siloxane may be aliphatic or aromatic.

The hydrocarbon groups in R¹ to R⁸ may be aliphatic hydrocarbon groups or aromatic hydrocarbon groups and are preferably aliphatic hydrocarbon groups. Examples of the hydrocarbon groups in R¹ to R⁸ include alkyl groups having 1 to 6 (for example, 1, 2, 3, 4, 5, or 6) carbon atoms (for example, a methyl group, an ethyl group, a propyl group, an isopropyl group, a n-butyl group, a sec-butyl group, an isobutyl group, a tert-butyl group, or a pentyl group), alkenyl groups having 2 to 6 (for example, 2, 3, 4, 5, or 6) carbon atoms (for example, a vinyl group or a 2-propenyl group), and alkynyl groups having 2 to 6 (for example, 2, 3, 4, 5, or 6) carbon atoms (for example, an ethynyl group or a propynyl group).

The hydrocarbon oxy groups in R¹ to R⁸ may be aliphatic hydrocarbon oxy groups or aromatic hydrocarbon oxy groups and are preferably aliphatic hydrocarbon oxy groups. Examples of the hydrocarbon oxy groups in R¹ to R⁸ include alkoxy groups having 1 to 6 (for example, 1, 2, 3, 4, 5, or 6) carbon atoms (for example, a methoxy group, an ethoxy group, or a propoxy group), alkenyl oxy groups having 2 to 6 (for example, 2, 3, 4, 5, or 6) carbon atoms (for example, a vinyl oxy group or a 2-propenyl oxy group), and alkynyl oxy groups having 2 to 6 (for example, 2, 3, 4, 5, or 6) carbon atoms (for example, an ethynyl oxy group or a propynyl oxy group).

The average numbers of carbon atoms in R¹ to R⁸ may be 0 to 6 and are preferably 1 to 3 and more preferably 1 or 2.

At least one of R¹ to R⁸ may not be a hydrogen atom (but the hydrocarbon group or the hydrocarbon oxy group described above). The number of R¹ to R⁸ that are other than hydrogen atoms may be 0% or more, 10% or more, 20% or more, 30% or more, 40% or more, 50% or more, 60% or more, 70% or more, 80% or more, or 90% or more and is preferably 50% or more of the total number of R¹ to R⁸. R¹ to R⁸ may be the same as one another.

R¹ to R⁸ may be hydrocarbon groups or hydrocarbon oxy groups (particularly, aliphatic groups) and may be linear, branched, or cyclic and are preferably linear or branched and more preferably linear.

All of R¹ to R⁸ may be hydrogen atoms or alkyl groups having 1 to 6 carbon atoms and are preferably alkyl group having 1 to 6 carbon atoms (for example, 1 to 3 carbon atoms or 1 or 2 carbon atoms) and more preferably methyl groups.

Each of R¹ to R⁸ may bond to one another either to form a ring or not to form a ring. In a case where a ring is formed, the ring may be formed of one of R¹ to R⁸ and R¹ to R⁸ bound to, for example, the same silicon atom or an adjacent silicon atom. Here, "bond" means the bonding of bonding sites that R¹ to R⁸ have, respectively, (for example, bonding sites generated by the elimination of hydrogen atoms in R¹ to R⁸) to one another.

n is an integer of 0 to 2 and is, for example, 1.

The molecular weight of the sulfur-containing cyclic siloxane may be 150 to 1,500 and is preferably 200 to 400.

The number of carbon atoms in the sulfur-containing cyclic siloxane may be 0 to 60 and is preferably 0 to 20.

Hitherto, one embodiment according to the present disclosure has been described, but it is understood that a variety of modifications in the form or details are possible without departing from the gist and scope of the claims.

### [Examples]

Hereinafter, the present disclosure will be described in detail using Examples, but the present disclosure is not limited to these Examples.

### [Example 1]

### (Ring-opening step)

After nitrogen purge, hexamethylcyclotrisiloxane, which is a cyclic siloxane, (249.9 g, 1.12 mol), tri-n-octylphosphine oxide (4.34 g, 0.011 mol) as a catalyst, and toluene (255.4 g) were added to a 1 L flask in which a thermometer, a cooling tube, and a motor stirrer had been set. Dichlorodimethylsilane (145.0 g, 1.12 mol) was added dropwise thereto at 25°C over 150 minutes under stirring. After the dropwise addition, the components were stirred at 300 rpm for three hours while the bath temperature was held at 25°C to 26°C. After that, toluene was removed by performing simple distillation at a bath temperature of 79°C to 134°C, an inner temperature of 69°C to 122°C, and a degree of decompression of 3.60 to 240 Torr, and 1,7-dichloro-octamethyltetrasiloxane, which is a chain siloxane, was obtained.

It was confirmed by GC analysis after the distillation that 335 g (yield: 83%) of 1,7-dichloro-octamethyltetrasiloxane with a purity of 97 area% was obtained. 1,7-Dichloro-octamethyltetrasiloxane for the next step was obtained by a plurality of times of the same operation.

### (Re-cyclization step)

After nitrogen purge, 1,7-Dichloro-octamethyltetrasiloxane (401.10 g, 1.050 mol), toluene (2309 g), and triethylamine (214.8 g, 2.123 mol) were added to a 10 L flask in which a thermometer, a cooling tube, and a motor stirrer had been set. Hydrogen sulfide (36.80 g, 1.0791 mol) was blown thereinto at an inner temperature of 23°C to 24°C over two hours under stirring. After hydrogen sulfide was blown thereinto, the components were stirred for two hours while the inner temperature was held at 23°C. After that, solid matter was removed by pressure filtration in a glove box replaced with nitrogen. After that, the solid matter was washed with toluene (1132 g), and a washing liquid and a filtrate were mixed together to obtain a solution containing 2,2,4,4,6,6,8,8-octamethyl-1,3,5-trioxa-7-thia-2,4,6,8-tetrasilacyclooctane. After that, toluene was removed by performing vacuum distillation at a bath temperature of 65°C to 70°C, an inner temperature of 53°C to 58°C, and 30 to 180 Torr. It was confirmed by GC analysis that 261.8 g (yield: 80%) of 2,2,4,4,6,6,8,8-octamethyl-1,3,5-trioxa-7-thia-2,4,6,8-tetrasilacyclooctane with a purity of 92.4 area% was obtained.

Vacuum distillation was performed at a bath temperature of 80°C to 150°C, an inner temperature of 68°C to 115°C, and 3.77 to 71.8 Torr, thereby obtaining 239.3 g of 2,2,4,4,6,6,8,8-octamethyl-1,3,5-trioxa-7-thia-2,4,6,8-tetrasilacyclooctane. It was confirmed by GC analysis after the distillation that 239.3 g (yield: 76% (after purification)) of 2,2,4,4,6,6,8,8-octamethyl-1,3,5-trioxa-7-thia-2,4,6,8-tetrasilacyclooctane with a purity of 98 area% was obtained. The obtained 2,2,4,4,6,6,8,8-octamethyl-1,3,5-trioxa-7-thia-2,4,6,8-tetrasilacyclooctane (the following formula) was identified by ¹H-NMR and GC-MS. ¹H-NMR signal assignment is as follows. A ¹H-NMR chart is as shown in Figure 1.

¹H-NMR (400 MHz, CDCl3): δ 0.12 (s, 12H, [CH₃-Si]), δ 0.43 (s, 12H, [CH₃-SiS])

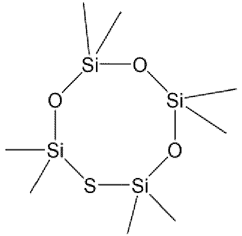

### [Example 2]

### (Re-cyclization step)

After nitrogen purge, 11.9 g (0.259 mol) of lithium sulfide and 1902 g of tetrahydrofuran were added to a 3 L flask in which a thermometer, a cooling tube, and a motor stirrer had been set. 65.3 g (0.186 mol) of 1,7-dichloro-octamethyltetrasiloxane was added dropwise thereto at room temperature (19°C to 20°C) over six minutes under stirring. After the dropwise addition, the components were stirred for six hours while the inner temperature was held at 20°C to 26°C. After that, tetrahydrofuran was removed by performing vacuum distillation at a bath temperature of 65°C, an inner temperature of 52°C to 60°C, and 140 to 270 Torr. After that, vacuum filtration was performed in a glove box replaced with nitrogen, and solid matter was removed. After that, the solid matter was washed using 75 g of hexane, and a washing liquid and a filtrate were mixed together to obtain a solution containing 2,2,4,4,6,6,8,8-octamethyl-1,3,5-trioxa-7-thia-2,4,6,8-tetrasilacyclooctane.

Vacuum distillation was performed at a bath temperature of 70°C to 95°C, an inner temperature of 60°C to 86°C, and 1.89 to 397 Torr, thereby obtaining 2,2,4,4,6,6,8,8-octamethyl-1,3,5-trioxa-7-thia-2,4,6,8-tetrasilacyclooctane with a high purity. It was confirmed by GC analysis after the distillation that 33.92 g (yield: 58%) of 2,2,4,4,6,6,8,8-octamethyl-1,3,5-trioxa-7-thia-2,4,6,8-tetrasilacyclooctane with a purity of 95 area% or more was obtained. The obtained 2,2,4,4,6,6,8,8-octamethyl-1,3,5-trioxa-7-thia-2,4,6,8-tetrasilacyclooctane was identified to be the same compound as Example 1 from ¹H-NMR and GC-MS.

### Industrial Applicability

According to the present disclosure, it is possible to provide a sulfur-containing cyclic siloxane by convenient steps under mild conditions in a high yield and with a high purity. Since the method for producing a sulfur-containing cyclic siloxane of the present disclosure is a reaction by convenient steps under mild conditions, the amount of energy used is reduced, and the method is capable of contributing to reduction in the amount of carbon dioxide discharged and is highly industrially available. In addition, the sulfur-containing cyclic siloxane of the present disclosure can be used as a silicon-containing film precursor and can be used in the production of a variety of silicon-containing films such as a silicon film, a silicon oxide film, a silicon nitride film, a silicon carbonitride film, and a silicon oxynitride film by a variety of vapor deposition steps (an atomic layer deposition (ALD) method, a chemical vapor deposition method, and the like), and the silicon-containing films function as insulating films, intermetallic dielectric substances, seed layers, spacers, hard masks, trench isolation, diffusion barrier films, etch stop layers, protective film layers, and the like, in semiconductor devices and the like.

## Claims

1. A method for producing a sulfur-containing cyclic siloxane, the method comprising:
a ring-opening step of reacting a cyclic siloxane and a dihalosilane to obtain a chain siloxane; and
a re-cyclization step of reacting the chain siloxane and a sulfurizing agent to obtain a sulfur-containing cyclic siloxane containing a sulfur atom as an atom constituting a part of a ring structure.

2. The method according to Claim 1,
wherein the cyclic siloxane is a compound represented by the following formula: 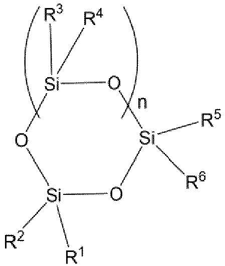
wherein R¹ to R⁶ are at each occurrence independently a hydrogen atom, a hydrocarbon group having 1 to 6 carbon atoms, or a hydrocarbon oxy group having 1 to 6 carbon atoms, R¹ to R⁶ each optionally bonding to each other to form a ring, and
n is an integer of 0 to 2,
the dihalosilane is a compound represented by the following formula: 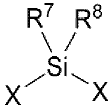
wherein R⁷ and R⁸ are at each occurrence independently a hydrogen atom, a hydrocarbon group having 1 to 6 carbon atoms, or a hydrocarbon oxy group having 1 to 6 carbon atoms, and
X is at each occurrence independently a halogen atom, and
the sulfurizing agent is a compound represented by the following formula:
Y₂S
wherein Y is at each occurrence independently a hydrogen atom, a sodium atom, or a lithium atom.

3. The method according to Claim 1,
wherein in the ring-opening step, one or more catalysts selected from the group consisting of a Lewis base compound having a bond represented by -C(=O)N<, a phosphorus compound having a P=O bond, a quaternary ammonium salt, and a quaternary phosphonium salt are used.

4. The method according to Claim 1,
wherein the sulfur-containing cyclic siloxane is a compound represented by the following formula: 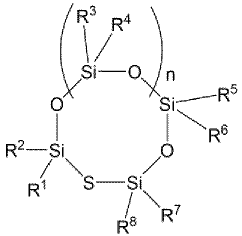
wherein R¹ to R⁸ are at each occurrence independently a hydrogen atom, a hydrocarbon group having 1 to 6 carbon atoms, or a hydrocarbon oxy group having 1 to 6 carbon atoms, R¹ to R⁸ each optionally bonding to each other to form a ring, and
n is an integer of 0 to 2.

5. The method according to Claim 1,
wherein the chain siloxane is a compound represented by the following formula: 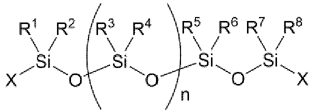
wherein R¹ to R⁸ are at each occurrence independently a hydrogen atom, a hydrocarbon group having 1 to 6 carbon atoms, or a hydrocarbon oxy group having 1 to 6 carbon atoms, R¹ to R⁸ each optionally bonding to each other to form a ring,
X is at each occurrence independently a halogen atom, and
n is an integer of 0 to 2.

6. The method according to Claim 1,
wherein the cyclic siloxane is a compound represented by the following formula: 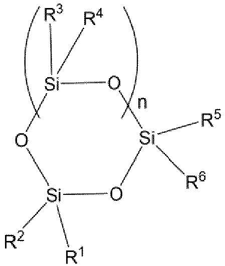
wherein R¹ to R⁶ are at each occurrence independently a hydrogen atom or an alkyl group having 1 to 6 carbon atoms, and
n is an integer of 0 to 2, and
the dihalosilane is a compound represented by the following formula: 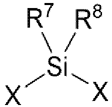
wherein R⁷ and R⁸ are at each occurrence independently a hydrogen atom or an alkyl group having 1 to 6 carbon atoms, and
X is at each occurrence independently a halogen atom.

7. The method according to Claim 1,
wherein the cyclic siloxane is a compound represented by the following formula: 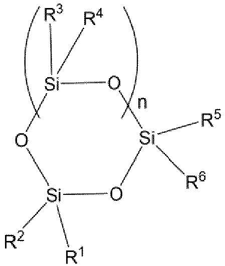
wherein R¹ to R⁶ are at each occurrence independently a hydrogen atom, a hydrocarbon group having 1 to 6 carbon atoms, or a hydrocarbon oxy group having 1 to 6 carbon atoms, R¹ to R⁶ each optionally bonding to each other to form a ring, and
n is 0 or 1.

8. The method according to Claim 1,
wherein the sulfur-containing cyclic siloxane is a silicon-containing film precursor.
